# FASCICULE DE BREVET EUROPEEN

(11) **EP 3 000 113 B1**
(45) Date de publication et mention de la délivrance du brevet: **21.06.2017**
(21) Numéro de dépôt: 14725169.8
(22) Date de dépôt: 20.05.2014
(51) Int. Cl.: G21F 5/008, G21F 5/08

(54) **EMBALLAGE D'ENTREPOSAGE DE COMBUSTIBLE IRRADIÉ COMPRENANT DES RAILS AMORTIS DE GUIDAGE D'ÉTUI**
LAGERBEHÄLTER FÜR BESTRAHLTEN BRENNSTOFF MIT FÜHRUNGSSCHIENEN MIT EINEM STOSSDÄMPFENDEN GEHÄUSE
STORAGE CONTAINER FOR IRRADIATED FUEL COMPRISING SHOCK-ABSORBING CASE GUIDE RAILS

(30) Priorité: 22.05.2013 FR 1354595
(43) Date de publication de la demande: 30.03.2016
(73) Titulaire: TN International, 78180 Montigny Le Bretonneux (FR)
(72) Inventeur: DE GASQUET, Vincent, 78280 Guyancourt (FR); CHAPUIS, Vianney, 92150 Suresnes (FR); NALLET, Stéphane, 78320 Le Mesnil Saint Denis (FR); VILELA, Louis, 27540 Ivry-la-Bataille (FR); VALLENTIN, Christophe, 91120 Palaiseau (FR); HOFFMANN, Carine, 78180 Montigny Le Bretonneux (FR)
(74) Mandataire: Brevalex
(86) Numéro de dépôt international: PCT/EP2014/060311
(87) Numéro de publication internationale: WO 2014/187806

(56) Documents cités:
- US-A- 4 800 283
- US-A1- 2005 173 432

## Description

### DOMAINE TECHNIQUE

La présente invention se rapporte au domaine des colis d'entreposage de combustible irradié, comprenant un emballage ainsi qu'un étui assurant le confinement du combustible irradié et étant logé dans la cavité définie par l'emballage.

### ÉTAT DE LA TECHNIQUE ANTÉRIEURE

L'emballage d'un colis d'entreposage de combustible irradié est généralement destiné à être agencé verticalement durant l'entreposage. Néanmoins, préalablement à l'entreposage, le chargement de l'étui de confinement dans la cavité de l'emballage peut être effectué avec ce dernier agencé horizontalement.

Pour faciliter l'introduction de l'étui, l'emballage peut être équipé intérieurement de rails de guidage de l'étui, sur lesquels cet étui vient en appui lorsqu'il est glissé dans la cavité.

Une fois cette opération réalisée, la cavité de logement de l'étui est refermée par le couvercle (ou le fond amovible) de l'emballage, puis le colis est basculé à 90° pour adopter sa position verticale d'entreposage.

Pour pouvoir répondre aux exigences réglementaires d'entreposage, le colis doit notamment satisfaire à l'épreuve dite de « crash d'avion ». Cette épreuve peut être simulée par un impact de très haute intensité survenant extérieurement sur le corps latéral de l'emballage. Il est alors nécessaire de démontrer que l'étui, assurant le confinement du combustible irradié, reste étanche après cet impact.

Il a été identifié que la présence des rails de guidage était une source de risque important de rupture de l'étanchéité de l'étui, surtout lorsque l'impact se situe sur la partie de l'emballage portant ces rails. Pour résoudre ce problème, il est possible de renforcer encore davantage l'emballage et/ou de le protéger avec des moyens amortisseurs supplémentaires, placés extérieurement autour du corps latéral de cet emballage.

Néanmoins, ces mesures peuvent s'avérer insuffisantes pour répondre au test de crash d'avion, et entraînent par ailleurs un volume et une masse globale extrêmement élevés, incompatibles avec les contraintes d'exploitation.

Il est noté que ce problème vis-à-vis des rails de guidage peut également être rencontré durant un séisme, au cours duquel les chocs répétés peuvent conduire à endommager l'étui de confinement, jusqu'à conduire à une rupture d'étanchéité. En outre, ce problème n'est pas seulement associé aux rails de guidage pour l'introduction de l'étui à l'horizontale dans la cavité de l'emballage, mais peut également survenir avec tout ensemble formant rail de guidage prévu pour l'introduction de l'étui à la verticale dans cette même cavité. Un colis comprenant un emballage d'entreposage ainsi qu'un étui de confinement est divulgué e.g. par US2005/0173432.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un colis selon l'objet de la revendication 1.

### BRÈVE DESCRIPTION DES DESSINS

Cette description sera faite au regard des dessins annexés parmi lesquels ;
- la figure 1 représente une vue en perspective d'un colis selon un mode de réalisation préféré de la présente invention, en position verticale d'entreposage ;
- la figure 2 représente une vue en perspective de l'emballage du colis montré sur la figure précédente, en position horizontale de chargement de l'étui ;
- la figure 3 représente une vue en coupe transversale de l'emballage montré sur la figure précédente, avec la cavité de l'emballage recevant l'étui ;
- la figure 4 représente une vue en perspective d'une partie de l'emballage montrant l'un des ensembles formant rails de guidage spécifiques à la présente invention ;
- la figure 5 est une vue en coupe prise selon la ligne V-V de la figure 3 ;
- la figure 6 est une vue en coupe prise le long de la ligne VI-VI de la figure 5 ;
- la figure 6a est une vue selon la flèche F1 de la figure 5, avec la cale de centrage de l'étui retirée ;
- la figure 6b est une vue selon la flèche F2 de la figure 5 ;
- la figure 7 est une vue similaire à celle de la figure 6a, avec la cale de centrage de l'étui représentée ;
- la figure 8 représente une vue schématisant le comportement de l'ensemble formant rail de guidage, en cas de choc survenant extérieurement sur le corps latéral de l'emballage ;
- la figure 8a représente de manière schématique un jeu latéral entre l'ensemble formant rail de guidage et les parois latérales de son logement ;
- la figure 9 est une vue similaire à celle de la figure 6a, avec l'ensemble formant rail de guidage se présentant selon un autre mode de réalisation envisagé ;
- la figure 10 est une vue similaire à celle de la figure 5, avec l'ensemble formant rail de guidage se présentant selon un autre mode de réalisation envisagé ;
- la figure 11 est une vue en coupe prise le long de la ligne XI-XI de la figure 10 ; et
- la figure 12 est une vue de dessus de celle de la figure 10.

### EXPOSÉ DÉTAILLÉ DE MODES DE RÉALISATION PARTICULIERS

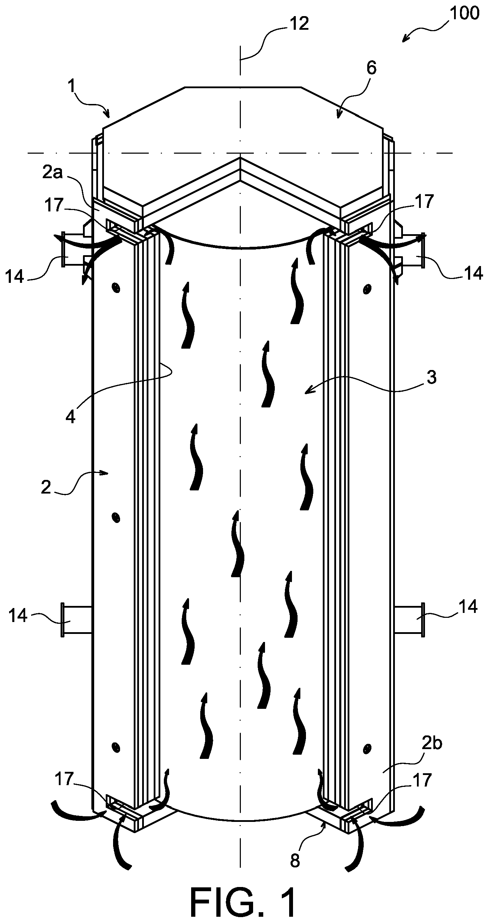

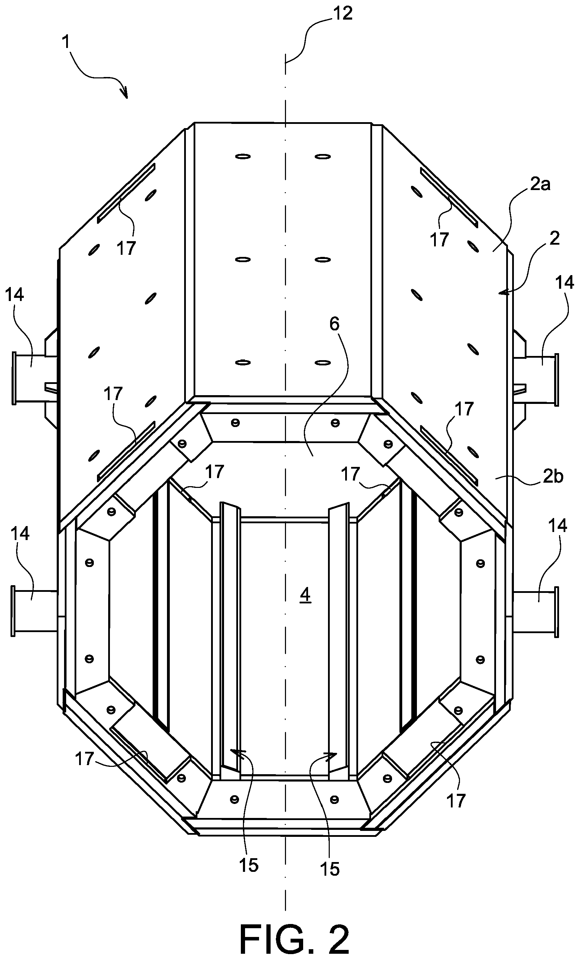

En référence tout d'abord aux figures 1 et 2, il est représenté un colis 100 d'entreposage de matières radioactives se présentant sous la forme d'un mode de réalisation préféré de la présente invention. Le colis est destiné à renfermer du combustible irradié. Il comporte un emballage 1 recevant un étui de confinement 3 renfermant le combustible irradié. Il s'agit de préférence de crayons de combustible irradié, de préférence regroupés au sein d'un ou plusieurs assemblages de combustible nucléaire.

L'emballage 1 comporte globalement un corps latéral creux 2 de forme cylindrique et définissant une cavité 4 pour recevoir l'étui 3, un couvercle de tête amovible 6 fermant la cavité 4 au niveau d'une extrémité haute 2a du corps 2, ainsi qu'un fond d'emballage 8 fermant la cavité 4 au niveau de l'autre extrémité du corps latéral 2, dite extrémité basse 2b. Le fond peut être réalisé d'un seul tenant avec le corps latéral.

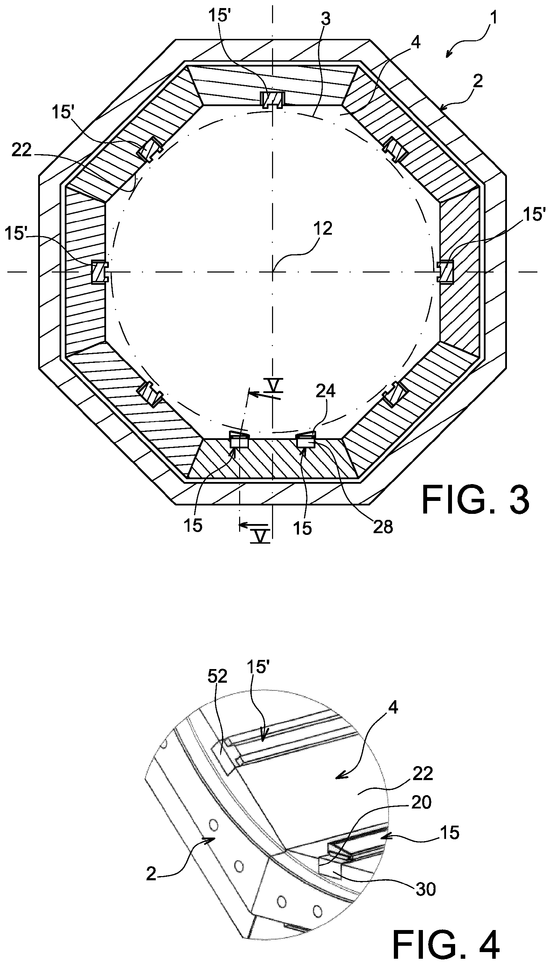

De manière connue de l'homme du métier, l'étui 3 (de l'anglais « canister »), remplit une très grande partie de la cavité 4. Habituellement, cela se traduit par le fait que dans un plan de coupe transversal quelconque de l'emballage 1 et de l'étui 3, comme celui de la figure 3, le rapport entre la superficie de l'étui 3 délimitée par sa surface extérieure, et la superficie de la cavité 4 délimitée par sa surface intérieure 22, est supérieur à 0,8.

Comme cela est connu de l'homme du métier, dans un tel emballage d'entreposage, de préférence longue durée, la cavité 4 ne constitue pas une enceinte de confinement pour les matières radioactives, cette enceinte étant effectivement définie par l'étui lui-même. Néanmoins, la conception de cet emballage assure les fonctions habituelles de protection neutronique, de protection contre le rayonnement gamma, et de résistance mécanique. Pour ce faire, il peut en particulier être prévu que l'épaisseur du corps latéral creux 2 soit d'au moins 200 mm, et réalisé en acier.

Le corps latéral 2 s'étend autour de l'axe longitudinal 12 de l'emballage, sur lequel est également centrée l'ouverture de la cavité située à l'opposé du fond 8.

L'emballage 1 comprend par ailleurs une pluralité d'organes de manutention 14, également dits tourillons de manutention, destinés à coopérer avec un palonnier (non représenté) pour permettre le déplacement / le basculement de l'emballage. Ils sont de préférence au nombre de quatre ou plus, répartis à proximité des extrémités haute et basse du corps latéral 2, duquel ils font saillie radialement vers l'extérieur.

Par ailleurs, l'emballage 1 comprend des moyens de ventilation permettant une circulation d'air par convection entre la cavité 4 et l'extérieur de l'emballage, lorsque celui-ci est en position verticale. Ces moyens spécifiques, assurant une circulation d'air permettant de collecter et d'évacuer une partie de la chaleur dégagée par les matières radioactives contenues dans l'étui, peuvent être réalisés de toute façon connue de l'homme du métier. A titre indicatif, des passages traversants 17 peuvent être pratiqués au niveau des extrémités supérieure et inférieure de l'emballage, de manière à faire communiquer l'extérieur de ce dernier avec la cavité 4. Ces passages traversants 17 peuvent par exemple être réalisés sur les extrémités haute 2a et basse 2b du corps 2, comme le montrent les figures 1 et 2. Ainsi, comme cela est schématisé par les flèches sur ces mêmes figures, l'air extérieur transite à travers le corps d'emballage 2 via les passages traversants 17 de l'extrémité basse 2b, pour ensuite pénétrer au sein d'un espace annulaire libre entre l'étui 3 et la paroi interne de la cavité 4, puis être extrait par des passages analogues 17 prévus à l'extrémité supérieure de corps 2.

La figure 4, sur laquelle le couvercle 6 a été retiré pour des raisons de clarté, montre que la surface intérieure 22 du corps latéral 2 délimitant la cavité 4 est équipée de moyens permettant d'aider l'étui à coulisser par rapport au corps latéral 2 lors de son chargement dans la cavité 4. A titre indicatif, il est noté que l'introduction peut alternativement être opérée depuis un fond amovible de l'emballage, sans sortir du cadre de l'invention.

Les moyens 15 permettant d'aider l'étui à coulisser sont spécifiques à la présente invention et vont être détaillés en faisant référence aux figures suivantes.

Tout d'abord en référence plus spécifiquement aux figures 3 à 6, il est montré que l'emballage comporte deux ensembles 15 formant rails de guidage de l'étui pour son introduction dans la cavité 4. Ces deux ensembles 15 sont espacés circonférentiellement l'un de l'autre, par exemple d'un angle compris entre 5 et 30° centré sur l'axe 12. Ces ensembles, de forme longiligne, s'étendent parallèlement à ce même axe 12. Ils sont chacun en partie logé dans un évidement 20 du corps latéral, et font saillie de ce dernier à l'intérieur de la cavité 4, c'est-à-dire qu'ils s'étendent radialement vers l'intérieur au-delà de la surface 22 du corps latéral 2 délimitant la cavité 4. L'évidement 20 est un logement sensiblement parallélépipédique s'étendant parallèlement à l'axe 12, sur sensiblement toute la longueur de la cavité.

Les deux ensembles 15 concernés sont ceux situés les plus bas lorsque l'emballage 1 repose horizontalement, dans la position de chargement de l'étui 3. Ils sont de préférence agencés symétriquement par rapport à un plan vertical médian intégrant l'axe 12.

Dans le mode de réalisation préféré représenté, chaque ensemble 15 comprend une partie radialement intérieure 24 formant rail, réalisée en acier. Un revêtement de glissement 26 peut être appliqué, par exemple en acier inoxydable dur. Bien entendu, ce revêtement a pour fonction de favoriser le glissement de l'étui sur les ensembles 15 lors de son introduction dans la cavité, de préférence mise en oeuvre avec l'emballage à l'horizontale comme cela est schématisé sur les figures 2 et 3.

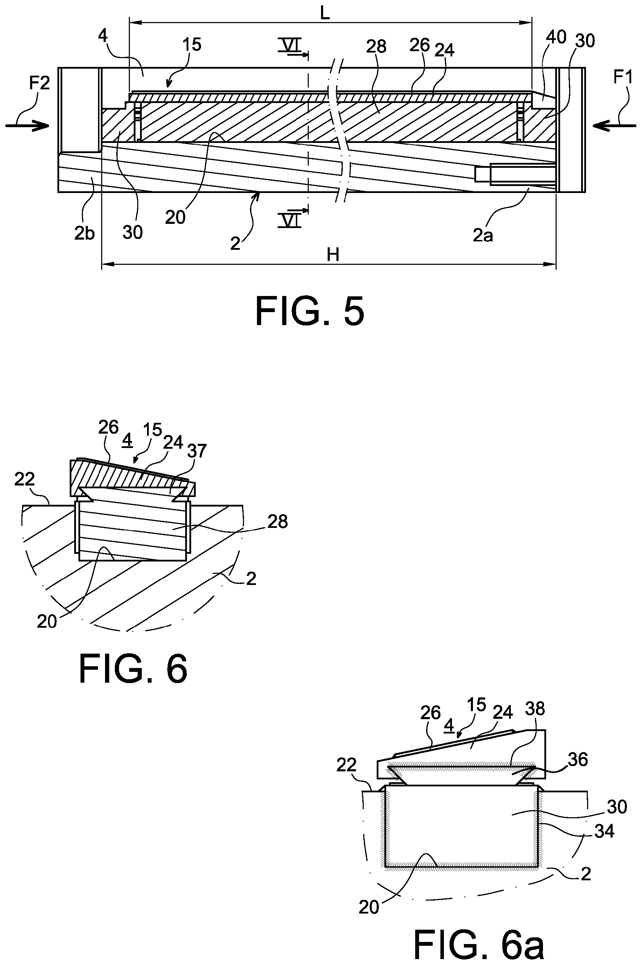

Chaque ensemble comporte également un élément amortisseur 28, de préférence réalisé en aluminium ou dans l'un de ses alliages. Cet élément 28 est logé au moins en partie dans l'évidement 20, en étant agencé entre le corps latéral 2 et le rail 24, comme cela est le mieux visible sur la figure 5. Cet élément amortisseur de choc 28 est conçu pour amortir, par déformation plastique, un choc latéral entre le corps 2 et l'étui de confinement 3. Aussi, bien que les ensembles 15 soient en saillie dans la cavité 4 afin de remplir leur fonction première de guidage de l'étui lors de son introduction dans l'emballage, les risques d'endommagement de cet étui de confinement sont limités par l'élément amortisseur de choc 28 déformable plastiquement.

L'élément amortisseur de choc 28 s'étend à l'intérieur de l'évidement 20, sous une forme de barre continue sur toute la longueur de l'ensemble 15. Alternativement, il peut s'agir de plusieurs tronçons d'amortisseur agencés bout à bout selon la direction longitudinale du rail 24, qui lui est très préférentiellement continu sur toute sa longueur, à savoir sur toute la longueur de l'ensemble 15. A cet égard, il est noté que chaque ensemble s'étend sur une très grande partie de l'emballage. Comme cela est visible sur la figure 5, chaque ensemble 15 s'étend selon la direction de l'axe longitudinal 12 sur une longueur « L » correspondant à au moins 70% de la hauteur « H » de la cavité 4, étant néanmoins précisé qu'un pourcentage allant jusqu'à 90% ou plus peut être envisagé.

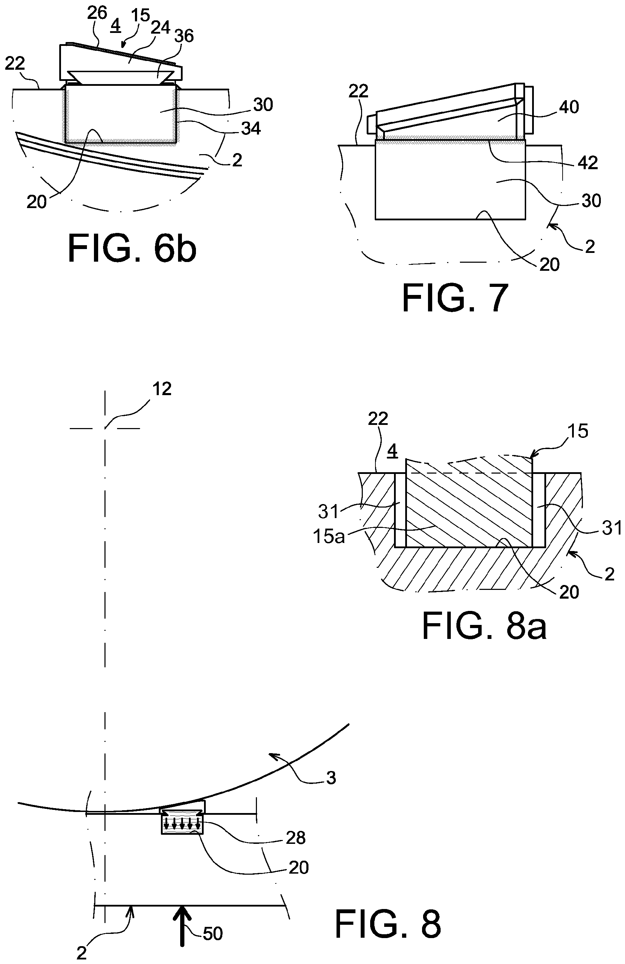

Le montage de chaque ensemble 15 sur le corps latéral 2 est réalisé à l'aide de deux cales de maintien 30 placées respectivement aux extrémités de l'évidement 20. Ces cales 30 sont de préférence soudées au corps latéral 2, comme le montrent les soudures en U 34 des figures 6a et 6b. De plus, les extrémités du rail 24 et les cales 30 sont reliées deux à deux par une liaison à complémentarité de forme 36, ici une liaison en queue d'aronde.

Comme cela est montré sur la figure 5, l'élément amortisseur 28 est agencé avec jeu axial entre la cale de tête 30 et la cale de fond 30, de manière à pouvoir se dilater librement selon la direction longitudinal de l'ensemble 15, relativement au corps 2 et au rail 24. En d'autres termes, l'élément amortisseur 28 est simplement calé axialement avec jeu, et maintenu radialement en étant enserré entre le fond de l'évidement 20 et le rail 24.

En référence à la figure 6, il est montré que le rail 24 et l'élément amortisseur de choc 28 sont reliés l'un à l'autre par une liaison à complémentarité de forme 37, ici une liaison en queue d'aronde. La liaison 37 se situe légèrement plus à l'intérieur que la surface de délimitation 22 de la cavité 4. Aussi, c'est une très grande partie de l'élément amortisseur 28 qui se situe dans l'évidement 20, et plus précisément, la quasi-intégralité de celui-ci à l'exception de son extrémité intérieure en forme de queue d'aronde, mâle ou femelle. Avec cette liaison 37, un mouvement relatif longitudinal peut se produire entre le rail 24 et l'élément amortisseur 28, selon une amplitude limitée, mais qui permet de faire face au phénomène de dilatation différentielle entre ces deux éléments 24, 28.

De retour à la figure 6a, il est noté que le rail 24 est rapporté fixement sur la cale de maintien 30 située du côté où l'étui est introduit. Dans le mode de réalisation décrit, c'est donc la cale située du côté du couvercle. La fixation s'effectue par exemple par une soudure 38 le long de l'interface en queue d'aronde. En revanche, tout le long du reste du rail 24 à partir de cette extrémité de rail située à proximité du couvercle de l'emballage, le rail est agencé libre en translation selon la direction longitudinale vis-à-vis de l'élément amortisseur 28. Il en est de même avec l'autre cale 30, comme cela est visible sur la figure 6b montrant la liaison 36 offrant un degré de liberté de translation entre le rail 24 et cette cale 30.

Par conséquent, le rail 24 est libre en translation relativement à l'amortisseur 28 jusqu'à son autre extrémité, ce qui permet en sus de gérer le problème de la dilatation différentielle entre ces deux éléments, de limiter les risques de flambement du rail 24 lors de l'opération de chargement de l'étui. En effet, durant cette introduction, le rail peut alors s'allonger librement en direction du fond, relativement à l'élément amortisseur 28 et à la cale 30 située à l'opposé de l'ouverture de la cavité dédiée à l'introduction de l'étui.

Les figures 5 et 7 montrent qu'une cale de centrage 40 est rapportée à l'avant de l'extrémité de tête du rail 24, en superposition sur la cale de maintien 30 à laquelle elle est préférentiellement assemblée par une soudure 42, agencée à l'interface avant entre ces deux cales 30, 40. Une autre soudure est également prévue à l'interface entre l'extrémité de tête du rail 24 et cette cale de centrage 40 permettant, grâce à sa surface inclinée, d'auto-centrer l'étui 3 durant la phase initiale de chargement de l'étui. La cale 40 est préférentiellement située en intégralité dans la cavité 4, c'est-à-dire déportée radialement vers l'intérieur par rapport à la surface 22.

La figure 8 représente une vue schématisant le comportement de l'ensemble 15 en cas de choc survenant extérieurement sur le corps latéral 2 de l'emballage, simulant par exemple le crash d'un avion sur le colis. Un comportement analogue peut également se produire en cas de séisme provoquant des chocs répétés d'intensité élevée.

Suite à un impact extérieur 50 sur le corps latéral 2 provoquant son déplacement et/ou sa déformation, les efforts transmis à l'étui sont en partie absorbés/filtrés par l'écrasement plastique de l'élément amortisseur 28 entre l'étui 3 et le fond de l'évidement 20 du corps latéral 2. En d'autres termes, en cas de choc extérieur d'intensité supérieure à une valeur déterminée, l'élément amortisseur 28 constitue une zone de déformation plastique privilégiée entre l'étui 3 et le corps 2.Pour favoriser l'écrasement de l'ensemble formant rail de guidage 15, ce dernier est monté avec jeu latéral dans son logement 20. Des tels jeux latéraux 31 ont été schématisés sur la coupe transversale de la figure 8a. Ils permettent en effet à la partie 15a de l'ensemble 15, située dans le logement 20, de s'écraser convenablement sans être gênés par les parois latérales du logement. Lors d'une chute, l'écrasement de la partie 15a, qui est préférentiellement entièrement constituée par l'élément amortisseur 28, conduit à une expansion latérale de l'ensemble 15 et donc à une consommation des jeux latéraux 31.

A titre indicatif, la somme de ces jeux peut être supérieure à 1 ou 2 mm. Alternativement, un unique jeu pourrait être prévu au lieu de deux, sans sortir du cadre de l'invention.

Quoi qu'il en soit, il est prévu que dans un plan de coupe transversal de l'ensemble 15, comme celui de la figure 8a, le rapport entre la superficie de la partie 15a située dans le logement 20, et la superficie de ce logement, est inférieur à 0,9.

Ce rapport est observé sur au moins 70% de la longueur du rail 15, mais n'est évidemment pas respecté au niveau des cales 30 comblant entièrement le logement 20.

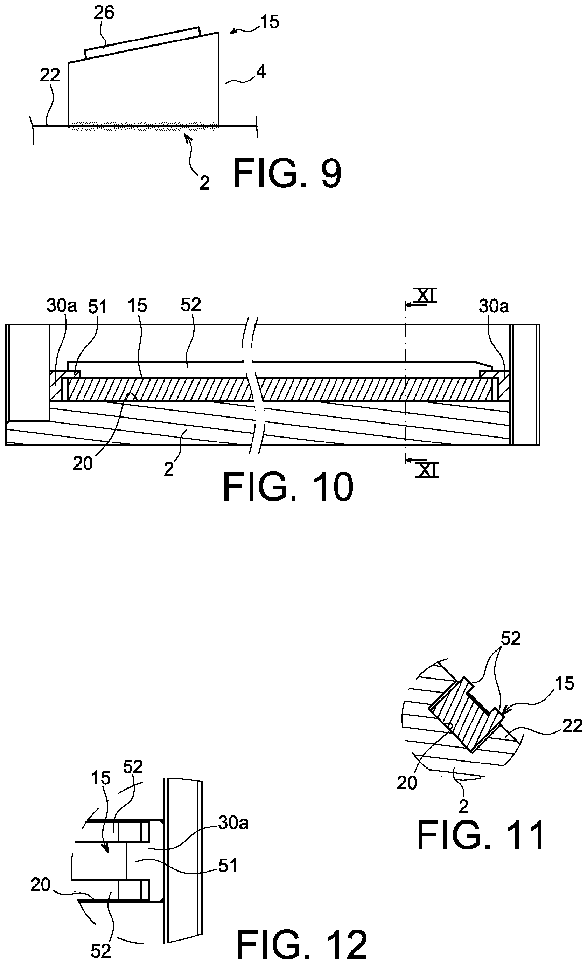

En référence à présent à la figure 9, il est représenté une autre réalisation possible pour l'ensemble 15. Ce dernier est tout d'abord réalisé d'un seul tenant. Il forme ainsi dans son intégralité un élément amortisseur conformé pour remplir la fonction de rail, même si le revêtement de glissement 26 peut être conservé à son extrémité intérieure. En outre, l'ensemble 15 est entièrement en saillie à partir de la surface intérieure 22 de délimitation de la cavité 4, et non plus partiellement inséré dans un évidement du corps latéral 2 de l'emballage.

En référence à présent aux figures 10 à 12, il est représenté une autre réalisation possible pour les ensembles 15 formant rails de guidage. Il s'agit de préférence d'une conception retenue pour les ensembles autres que les deux ensembles 15 du bas montrés sur les figures 3 et 4 et décrits ci-dessus. Ces autres ensembles, agencés tout autour de la cavité 4, sont référencés 15' sur ces figures 3 et 4. Par la suite, ils seront néanmoins décrits sous la référence 15 pour la description des figures 10 à 12.

Chaque ensemble 15 est également réalisé d'un seul tenant en formant intégralement l'élément amortisseur. Il est libre en translation relativement au corps 2, selon la direction longitudinale du rail. Il est aussi placé dans un logement 20 de ce corps 2, en étant simplement maintenu à ses extrémités sur ce corps par deux brides de fixation 30a. Pour ce faire, les brides 30a sont de préférence soudées au corps 2, et présentent une patte 51 de maintien plaquant l'ensemble 15 dans le fond du logement 20. Pour la dilatation thermique de l'ensemble 15, des jeux axiaux sont prévus entre ce dernier et les brides 30a également agencées dans le logement 20 du corps d'emballage 2.

La patte 51 des brides de fixation 30a est appliquée entre deux saillies extérieures longitudinale 52 de l'ensemble 15, ces saillies 52 cheminant chacune selon la direction longitudinale du rail.

Bien entendu, diverses modifications peuvent être apportées par l'homme du métier à l'invention qui vient d'être décrite, uniquement à titre d'exemples non limitatifs.

## Revendications

1. Colis (100) comprenant un emballage d'entreposage (1) ainsi qu'un étui (3) de confinement de combustible irradié, l'emballage comprenant un corps latéral (2) s'étendant autour d'un axe longitudinal (12) de l'emballage et comportant une surface intérieure (22) délimitant une cavité de logement (4) dans laquelle est placé l'étui (3), l'emballage comprenant en outre au moins un ensemble (15) formant rail de guidage de l'étui dans la cavité, l'ensemble (15) étant monté sur le corps latéral (2) et faisant saillie au moins partiellement dans la cavité de logement (4) à partir de ladite surface intérieure (22) du corps latéral (2),
**caractérisé en ce que** ledit ensemble formant rail de guidage (15) comporte un élément amortisseur de choc (28) conçu pour amortir, par déformation plastique, un choc latéral entre l'emballage (1) et l'étui de confinement (3), et **en ce que** dans un plan de coupe transversal quelconque de l'emballage (1) et de l'étui (3), le rapport entre la superficie de l'étui (3) délimitée par sa surface extérieure, et la superficie de la cavité (4) délimitée par sa surface intérieure (22), est supérieur à 0,8.

2. Colis selon la revendication 1, **caractérisé en ce que** ledit ensemble formant rail de guidage (15) s'étend selon la direction de l'axe longitudinal (12) sur une longueur (L) correspondant à au moins 70% de la hauteur (H) de la cavité de logement (4) selon cette même direction.

3. Colis selon la revendication 1 ou la revendication 2, **caractérisé en ce que** l'ensemble formant rail de guidage (15) est parallèle à l'axe longitudinal (12).

4. Colis selon l'une quelconque des revendications précédentes, **caractérisé en ce qu'**il comprend une pluralité d'ensembles formant rails de guidage (15) espacés circonférientiellement les uns des autres sur la surface intérieure (22) du corps d'emballage (2).

5. Colis selon l'une quelconque des revendications précédentes, **caractérisé en ce que** l'élément amortisseur de choc (28) est réalisé en aluminium ou dans l'un de ses alliages.

6. Colis selon l'une quelconque des revendications précédentes, **caractérisé en ce que** l'ensemble formant rail de guidage (15) est agencé en partie dans un logement (20) pratiqué dans le corps latéral (2).

7. Colis selon la revendication 6, **caractérisé en ce que** dans un plan de coupe transversal de l'ensemble formant rail de guidage (15), le rapport entre la superficie de la partie (15a) de cet ensemble située dans le logement (20), et la superficie de ce logement, est inférieur à 0,9.

8. Colis selon l'une quelconque des revendications précédentes, **caractérisé en ce que** l'ensemble formant rail de guidage (15) comprend une partie radialement intérieure formant un rail (24), ainsi que l'élément amortisseur (26) agencé entre le rail et le corps latéral d'emballage.

9. Colis selon la revendication 8, **caractérisé en ce que** le rail est pourvu d'un revêtement de glissement (26).

10. Colis selon la revendication 8 ou la revendication 9, **caractérisé en ce que** le rail (24) est réalisé en acier.

11. Colis selon l'une quelconque des revendications 8 à 10, **caractérisé en ce que** le rail (24) et l'élément amortisseur de choc (28) sont reliés l'un à l'autre par une liaison à complémentarité de forme (36).

12. Colis selon l'une quelconque des revendications 8 à 11, **caractérisé en ce que** le rail (24) est rapporté fixement sur le corps latéral (2) à l'une de ses extrémités, et **en ce que** ce même rail (24) est agencé libre en translation selon la direction longitudinale du rail, vis-à-vis de l'élément amortisseur (28), jusqu'à son autre extrémité.

13. Colis selon l'une quelconque des revendications précédentes, **caractérisé en ce que** l'étui (3) renferme des crayons de combustible irradié, de préférence regroupés au sein d'un ou plusieurs assemblages de combustible nucléaire.

## Patentansprüche

1. Packung (100) mit einem Lagerbehälter (1) sowie einer Hülle (3) zum Umschließen von bestrahltem Brennstoff, wobei der Behälter einen seitlichen Körper (2) enthält, der sich um eine Längsachse (12) des Behälters erstreckt und eine Innenfläche (22) aufweist, die einen Aufnahmehohlraum (4) begrenzt, in welchem die Hülle (3) angeordnet ist, wobei der Behälter ferner zumindest eine Führungsschieneneinheit (15) für die Hülle in dem Hohlraum enthält, wobei die Einheit (15) an den seitlichen Körper angebracht ist und ausgehend von der Innenfläche (22) des seitlichen Körpers (2) zumindest teilweise in den Aufnahmehohlraum (4) vorspringt,
**dadurch gekennzeichnet, dass** die Führungsschieneneinheit (15) ein Stoßdämpfungselement (28) enthält, das dazu ausgelegt ist, durch plastische Verformung einen seitlichen Stoß zwischen dem Behälter (1) und der Umschließungshülle (3) zu dämpfen, und dass in einer beliebigen Querschnittebene des Behälters (1) und der Hülle (3) das Verhältnis zwischen der Oberfläche der Hülle (3), die von seiner Außenfläche eingegrenzt wird, und der Oberfläche des Hohlraums (4), die von seiner Innenfläche (22) eingegrenzt wird, größer als 0,8 ist.

2. Packung nach Anspruch 1, **dadurch gekennzeichnet, dass** die Führungsschieneneinheit (15) sich in Richtung der Längsachse (12) über eine Länge (L) erstreckt, die zumindest 70 % der Höhe (H) des Aufnahmehohlraums (4) in dieser gleichen Richtung entspricht.

3. Packung nach Anspruch 1 oder Anspruch 2, **dadurch gekennzeichnet, dass** die Führungsschieneneinheit (15) parallel zur Längsachse (12) verläuft.

4. Packung nach einem der vorangehenden Ansprüche, **dadurch gekennzeichnet, dass** sie eine Mehrzahl von Führungsschieneneinheiten (15) enthält, die an der Innenfläche (22) des Behälterkörpers (2) umfänglich voneinander beabstandet sind.

5. Packung nach einem der vorangehenden Ansprüche, **dadurch gekennzeichnet, dass** das Stoßdämpfungselement (28) aus Aluminium oder einer seiner Legierungen ausgeführt ist.

6. Packung nach einem der vorangehenden Ansprüche, **dadurch gekennzeichnet, dass** die Führungsschieneneinheit (15) teilweise in einer Aufnahmeausnehmung (20) angeordnet ist, die in dem seitlichen Körper (2) ausgeführt ist.

7. Packung nach Anspruch 6, **dadurch gekennzeichnet, dass** in einer Querschnittebene der Führungsschieneneinheit (15) das Verhältnis zwischen der Oberfläche des in der Aufnahmeausnehmung (20) befindlichen Teils (15a) dieser Einheit und der Oberfläche dieser Aufnahmeausnehmung geringer als 0,9 ist.

8. Packung nach einem der vorangehenden Ansprüche, **dadurch gekennzeichnet, dass** die Führungsschieneneinheit (15) einen radial inneren Teil aufweist, der eine Schiene (24) bildet, sowie das Dämpfungselement (26), das zwischen der Schiene und dem seitlichen Behälterkörper angeordnet ist.

9. Packung nach Anspruch 8, **dadurch gekennzeichnet, dass** die Schiene mit einer Gleitbeschichtung (26) versehen ist.

10. Packung nach Anspruch 8 oder Anspruch 9, **dadurch gekennzeichnet, dass** die Schiene (24) aus Stahl hergestellt ist.

11. Packung nach einem der Ansprüche 8 bis 10, **dadurch gekennzeichnet, dass** die Schiene (24) und das Stoßdämpfungselement (28) über eine formschlüssige Verbindung (36) miteinander verbunden sind.

12. Packung nach einem der Ansprüche 8 bis 11, **dadurch gekennzeichnet, dass** die Schiene (24) mit einem ihrer Enden fest an den seitlichen Körper (2) angebracht ist und dass diese gleiche Schiene (24) in Längsrichtung der Schiene gegenüber dem Dämpfungselement (28) bis zu ihrem anderen Ende hin frei verschiebbar angeordnet ist.

13. Packung nach einem der vorangehenden Ansprüche, **dadurch gekennzeichnet, dass** die Hülle (3) bestrahlte Brennstäbe umschließt, die vorzugsweise in einem oder in mehreren Kernbrennstabbündeln zusammengefasst sind.

## Claims

1. Package (100) comprising storage packaging (1) as well as a confinement canister (3) for irradiated fuel, the packaging comprising a lateral body (2) which extends around a longitudinal axis (12) of the packaging and which includes an internal surface (22) which delimits a housing cavity (4) wherein the canister (3) is placed, the packaging furthermore comprising at least one assembly (15) forming a guide rail for the canister in the cavity, the assembly (15) being mounted on the lateral body and protruding at least partly into the housing cavity (4) from said internal surface (22) of the lateral body (2),
**characterised in that** said assembly forming a guide rail (15) includes an impact shock absorbing element (28) designed to absorb the shock, by plastic deformation, of a lateral impact between the packaging (1) and the confinement canister (3), and **in that** in any transverse section plane through the packaging (1) and through the canister (3), the ratio of the surface area of the canister (3) delimited by its external surface to the surface area of the cavity (4) delimited by its internal surface (22) is greater than 0.8.

2. Package according to claim 1, **characterised in that** said assembly forming the guide rail (15) extends along the direction of the longitudinal axis (12) over a length (L) corresponding to at least 70% of the height (H) of the housing cavity (4) along this same direction.

3. Package according to claim 1 or claim 2, **characterised in that** the assembly forming a guide rail (15) is parallel to the longitudinal axis (12).

4. Package according to any of the preceding claims, **characterised in that** it comprises multiple assemblies forming guide rails (15) spaced circumferentially apart from each other on the interior surface (22) of the packaging body (2).

5. Package according to any of the preceding claims, **characterised in that** the impact shock absorbing element (28) is made of aluminium or of one of its alloys.

6. Package according to any of the preceding claims, **characterised in that** the assembly forming a guide rail (15) is arranged, in part, in a housing (20) made in the lateral body (2).

7. Package according to claim 6, **characterised in that** in a transverse sectional plane of the assembly forming a guide rail (15), the ratio of the surface area of the portion (15a) of this assembly located in the housing (20) to the surface area of this housing is less than 0.9.

8. Package according to any of the preceding claims, **characterised in that** the assembly forming the guide rail (15) comprises a radially internal portion forming a rail (24) as well as the shock absorbing element (26) arranged between the rail and the packaging lateral body.

9. Package according to claim 8, **characterised in that** the rail is provided with a low-friction coating (26).

10. Package according to claim 8 or claim 9, **characterised in that** the rail (24) is made of steel.

11. Package according to any of claims 8 to 10, **characterised in that** the rail (24) and the impact shock absorbing element (28) are connected to each other by a connection which uses complementary shaped parts (36).

12. Package according to any of claims 8 to 11, **characterised in that** the rail (24) is firmly attached to the lateral body (2) at one of its ends and **in that** the same rail (24) is arranged so that it is free to move in translation along the longitudinal direction of the rail, relative to the shock absorbing element (28), up to its other end.

13. Package according to any of the preceding claims, **characterised in that** the canister (3) contains irradiated fuel rods, preferably grouped together within one or more nuclear fuel assemblies.
